# EUROPEAN PATENT SPECIFICATION

(11) **EP 1 885 775 B1**
(45) Date of publication and mention of the grant of the patent: **24.07.2013**
(21) Application number: 06771572.2
(22) Date of filing: 26.05.2006
(51) Int. Cl.: C08J 5/00

(54) **ENHANCING INTERACTIVITY BETWEEN AMINE-FUNCTIONALIZED POLYMERS AND PARTICULATE FILLERS**
VERSTÄRKUNG DER INTERAKTIVITÄT ZWISCHEN AMINOFUNKTIONALISIERTEN POLYMEREN UND TEILCHENFÖRMIGEN FÜLLSTOFFEN
PROCEDE D'AMELIORATION DE L'INTERACTIVITE ENTRE DES POLYMERES A FONCTIONS AMINE ET DES CHARGES PARTICULAIRES

(30) Priority: 26.05.2005 US 684862 P
(43) Date of publication of application: 13.02.2008
(73) Proprietor: Bridgestone Corporation, Tokyo 104-8340 (JP)
(72) Inventor: YAN, Yuan-Yong, Copley, OH 44321 (US)
(74) Representative: Waldren, Robin Michael
(86) International application number: PCT/US2006/020888
(87) International publication number: WO 2006/128158

(56) References cited:
- WO-A-94/26815
- DE-A1- 19 539 653
- FR-A- 2 713 685
- US-A- 4 300 970
- US-A- 4 480 006
- US-A- 4 740 562

## Description

### BACKGROUND INFORMATION

### 1. Field of the Invention

The invention relates to the manufacture and use of functionalized polymers that can interact with fillers.

### 2. Background of the Invention

Rubber goods such as tire treads often are made from elastomeric compositions that contain one or more reinforcing materials such as, for example, particulate carbon black and silica; see, e.g., The Vanderbilt Rubber Handbook, 13th ed. (1990), pp. 603-04.

Typically, filler(s), elastomeric material(s), and additives are chosen so as to provide a composition from which can be made rubber articles with an acceptable compromise or balance of performance properties such as traction, abrasion resistance, hysteresis, etc. Ensuring that reinforcing filler(s) are well dispersed throughout the elastomeric material(s) both enhances processability and acts to improve physical properties. Dispersion of fillers can be improved by increasing their interaction with the elastomer(s). Examples of efforts of this type include high temperature mixing in the presence of selectively reactive promoters, surface oxidation of compounding materials, surface grafting, and chemical modifications to the terminal ends of the polymers.

Where a polymer is made by anionic polymerization techniques, attachment of certain functional groups is difficult due to the fact that carbanions, such as living polymers, are terminated by active hydrogen atoms such as are present in, e.g., primary and secondary amine groups. However, because amine functional groups provide desirable interaction with particulate fillers, particularly carbon black, commercially useful methods of providing polymers, even living polymers, with terminal amine functionality remain desirable. Because the interactivity with fillers tends to increase as the number of hydrogens bonded to the amino nitrogen increases, provision of secondary and primary amine-functionalized polymers is particularly desirable.

One procedure for providing amine functionality to anionically initiated polymers is described by K. Ueda et al., "Synthesis of Polymers with Amino End Groups - 3. Reactions of Anionic Living Polymers with α-Halo-ω-aminoalkanes with a Protected Amino Functionality," Macromolecules, 1990, 23, 939-45. Anionic living polystyrene is reacted with an α-halo-ω-aminoalkane followed by de-protection of the trialkylsilyl-protected amine functionality to provide a primary amino-functionalized polystyrene. The utility of the described procedure is limited by the academic laboratory conditions employed, however. The impact of these limitations on the practical utility of the described procedure is recognized in other academic publications; see, e.g., R. Quirk et al., "Anionic Synthesis of ω-Dimethylamino-Functionalized Polymers by Functionalization of Polymeric Organolithiums with 3-Dimethylaminopropyl Chloride," Polym. Int., 1999, 48, 99-108.

After a functionalized polymer has been blended with one or more particulate fillers, the resulting composition, commonly referred to as rubber stock, often must be stored for some time before being used to make articles therefrom. During the time intermediate creation and use, some characteristics of the rubber stock can be degraded under certain circumstances. Thus, developing methods for enhancing the useful longevity of rubber stock prior to use also is desirable.

### SUMMARY OF THE INVENTION

The appended claims set forth a process for maintaining or enhancing the stability of a filled rubber composition employing a polymer that includes a primary or secondary amino functional group.

In one aspect is provided a process for providing interaction between a functionalized polymer and particulate filler as claimed in claim 1.

Advantageously, rubber stock that includes a polymer with acidic cation-protected amine functionality exhibits excellent storage stability. Additionally, when such rubber stock is compounded with a material that includes acid-reactive functionality such as, for example, a curative, an antioxidant, or an antiozonant, the resulting primary or secondary amine functionality group conveniently is made available for interaction with particulate filler such as, e.g., carbon black, upon compounding. These rubber compounds are useful for a variety of purposes including, advantageously, the formation of tire components.

Other aspects of the present invention will be apparent from the detailed description that follows.

### DETAILED DESCRIPTION OF ILLUSTRATIVE EMBODIMENTS

To assist in understanding the following description of various embodiments of the invention, certain definitions are provided immediately below. These are intended to apply throughout unless the surrounding text explicitly indicates a contrary intention:
"polymer" means the polymerization product of one or more monomers and is inclusive of homo-, co-, ter-, tetra-polymers, etc.;
"mer" or "mer unit" means that portion of a polymer derived from a single reactant molecule (e.g., ethylene mer has the general formula -CH₂CH₂-);
"copolymer" means a polymer that includes mer units derived from two monomers and is inclusive of random, block, segmented, graft, etc., copolymers;
"interpolymer" means a polymer that includes mer units derived from at least two monomers and is inclusive of co-, ter-, tetra-polymers, and the like;
"polyene" means a molecule with at least two double bonds located in the longest portion or chain thereof, and specifically includes dienes, trienes, and the like;
"lanthanide compound" means a compound that includes at least one atom of La, Nd, Ce, Pr, Pm, Sm, Eu, Gd, Tb, Dy, Ho, Er, Tm, Yb, Lu, and didymium (a mixture of rare-earth elements that can be obtained from monazite sand);
"organoaluminum compound" means a compound containing at least one Al-C bond;
"organomagnesium compound" means compound containing at least one Mg-C bond;
"terminus" means an end of a polymer chain;
"terminal", when used as an adjective, means that group or moiety which is located at the terminus of a molecule or polymer chain (for example, a terminal amino group would be an amino group that is located at a terminus);
"protected amino group" means an amino group having an amino nitrogen atom bonded to atoms other than hydrogen but capable of being converted to a primary or secondary amino group, with the proviso that the group does not terminate (i.e., react directly with) a carbanion such as a living polymer;
"drop temperature" is a prescribed upper temperature at which a filled rubber composition (vulcanizate) is evacuated from mixing equipment (e.g., a Banbury mixer) to a mill for being worked into sheets; and
"hysteresis" means the difference between the energy applied to deform an article made from an elastomeric compound and the energy released as the article returns to its initial, non-deformed state.

The functionalized polymer includes a polymeric chain with at least one terminal amino functional group. The amino functional group includes at least one hydrogen atom bonded to the amino nitrogen atom, i.e., the amine is primary or secondary. Until the polymer is compounded prior to use in the manufacture of articles, the amino functional group advantageously is present is in an acidic cation form.

The polymeric chain is elastomeric and includes mer units that include unsaturation such as those derived polyenes, particularly dienes and trienes (e.g., myrcene). Illustrative polyenes include C₄-C₁₂ dienes, particularly conjugated dienes such as, but not limited to, 1,3-butadiene, isoprene, 1,3-pentadiene, 2,3-dimethyl-1,3-butadiene, and 1,3- and 2,4-hexadiene. Homo- and interpolymers that include just polyene-derived mer units constitute one illustrative type of elastomer.

Depending on the intended end use, the polymeric chain also can include pendent aromatic groups such as can be provided through incorporation of mer units derived from vinyl aromatics, particularly the C₈-C₂₀ vinyl aromatics such as, e.g., styrene, α-methyl styrene, p-methyl styrene, the vinyl toluenes, and the vinyl naphthalenes. When used in conjunction with one or more polyenes, mer units with pendent aromaticity can constitute from about 1 to about 50% by wt., from about 10 to about 45% by wt., or from about 20 to about 35% by wt., of the polymer chain; such interpolymers constitute an exemplary class of polymers. The microstructure of such interpolymers can be random, i.e., the mer units derived from each type of constituent monomer do not form blocks and, instead, are incorporated in a non-repeating, essentially simultaneous manner. Random microstructure can provide particular benefit in certain end use applications such as, e.g., rubber compositions used in the manufacture of tire treads.

Exemplary elastomers include poly(butadiene), (poly)isoprene (either natural or synthesized), and interpolymers of butadiene and styrene such as, e.g., copoly(styrene/ butadiene) also known as SBR.

Polyenes can incorporate into polymeric chains in more than one way. Especially for tire tread applications, controlling this manner of incorporation into the polymer (i.e., the 1,2-microstructure of the polymer) can be desirable. A polymer chain with an overall 1,2-microstructure, based on total polyene content, of from about 10 to about 80%, optionally from about 25 to 65%, can be desirable for certain end use applications. For other end use applications, keeping the content of 1,2-linkages to less than about 7%, less than 5%, less than 2%, or less than 1% can be desirable.

The number average molecular weight (Mₙ) of the polymer typically is such that a quenched sample exhibits a gum Mooney viscosity (ML₄ / 100°C) of from about 2 to about 150, more commonly 2.5 to about 50. Exemplary Mₙ values range from ∼5000 to ∼200,000, commonly from ∼25,000 to ∼150,000, and typically from ∼50,000 to ∼125,000.

The foregoing polymers can be made by emulsion polymerization or solution polymerization, with the latter affording greater control with respect to such properties as randomness, microstructure, etc. Solution polymerizations have been performed since about the mid-20th century, and the general aspects thereof are known to the ordinarily skilled artisan, although certain aspects are provided here for convenience of reference.

Depending on the nature of the polymer desired, the particular conditions of the solution polymerization can vary significantly. In the discussion that follows, living polymerizations are described first followed by a description of pseudo-living polymerizations. After these descriptions, the functionalization and processing of polymers so made are discussed.

Solution polymerization typically involves an initiator. Exemplary initiators include organolithium compounds, particularly alkyllithium compounds. Examples of organolithium initiators include N-lithio-hexamethyleneimine; n-butyllithium; tributyltin lithium; dialkylaminolithium compounds such as dimethylaminolithium, diethylaminolithium, dipropylaminolithium, dibutylaminolithium and the like; dialkylaminoalkyllithium compounds such as diethylaminopropyllithium; and those trialkyl stanyl lithium compounds involving C₁-C₁₂, preferably C₁-C₄, alkyl groups.

Multifunctional initiators, i.e., initiators capable of forming polymers with more than one living end, also can be used. Examples of multifunctional initiators include, but are not limited to, 1,4-dilithiobutane, 1,10-dilithiodecane, 1,20-dilithioeicosane, 1,4-dilithiobenzene, 1,4-dilithionaphthalene, 1,10-dilithioanthracene, 1,2-dilithio-1,2-diphenylethane, 1,3,5-trilithiopentane, 1,5,15-trilithioeicosane, 1,3,5-trilithiocyclohexane, 1,3,5,8-tetralithiodecane, 1,5,10,20-tetralithioeicosane, 1,2,4,6-tetralithiocyclohexane, and 4,4'-dilithiobiphenyl.

In addition to organolithium initiators, also useful are the so-called functionalized initiators that become incorporated into the polymer chain, thus providing a functional group at the initiated end of the chain. Examples of such materials include the reaction product of organolithium compounds and, for example, N-containing organic compounds (e.g., substituted aldimines, ketimines, secondary amines, etc.) optionally pre-reacted with a compound such as diisopropenyl benzene. A more detailed description of these materials can be found in, e.g., U.S. Pat. Nos. 5,153,159 and 5,567,815.

Typical solution polymerization solvents include various C₅-C₁₂ cyclic and acyclic alkanes as well as their alkylated derivatives, certain liquid aromatic compounds, and mixtures thereof. Solvents capable of quenching the polymerization are avoided.

In solution polymerizations, both randomization of the mer units and vinyl content (i.e., 1,2-microstructure) can be increased through inclusion of a coordinator, usually a polar compound, in the polymerization ingredients. Up to 90 or more equivalents of coordinator can be used per equivalent of initiator, with the amount depending on, e.g., the amount of vinyl content desired, the level of non-polyene monomer employed, the reaction temperature, and the nature of the specific coordinator employed. Useful coordinators include organic compounds having a heteroatom with a non-bonded pair of electrons (e.g., O or N). Examples include dialkyl ethers of mono- and oligo-alkylene glycols; crown ethers; tertiary amines such as tetramethylethylene diamine; THF; THF oligomers; linear and cyclic oligomeric oxolanyl alkanes such as 2,2'-di(tetrahydrofuryl) propane, di-piperidyl ethane, hexamethylphosphoramide, N,N'-dimethylpiperazine, diazabicyclooctane, diethyl ether, tributylamine, and the like. Details of linear and cyclic oligomeric oxolanyl coordinators can be found in U.S. Pat. No. 4,429,091, the teaching of which relating to the manufacture and use of such materials is incorporated by reference.

Although the ordinarily skilled artisan understands the type of conditions typically employed in solution polymerization, a representative description is provided for the convenience of the reader. The following is based on a batch process, although extending this description to, e.g., semi-batch or continuous processes is within the capability of the ordinarily skilled artisan.

Polymerization typically begins by charging a blend of monomer(s) and solvent to a suitable reaction vessel, followed by addition of the coordinator (if used) and initiator, which often are added as part of a solution or blend; alternatively, monomer(s) and coordinator can be added to the initiator. Anhydrous, anaerobic conditions typically are employed. The reactants can be heated to a temperature of up to about 150°C and agitated. After a desired degree of conversion has been reached, the heat source (if used) can be removed. If the reaction vessel is to be reserved solely for polymerizations, the reaction mixture can be removed to a post-polymerization vessel for functionalization and/or quenching.

Certain end use applications call for polymers that have properties that can be difficult or inefficient to achieve via anionic or living polymerizations such as those just described. For example, in some applications, conjugated diene polymers having high cis-1,4-linkage contents can be desirable. Such polydienes can be prepared by processes using lanthanide-based catalysts (as opposed to the initiators employed in living polymerizations) and may display pseudo-living characteristics.

In one or more embodiments, the catalyst composition may include a lanthanide compound, an alkylating agent, and a compound including a labile halogen atom. Where the lanthanide compound and/or alkylating agent include a labile halogen atom, the catalyst need not include a separate halogen source, i.e., the catalyst may simply include a halogenated lanthanide compound and an alkylating agent. In certain embodiments, the alkylating agent may include both an aluminoxane and an alkyl aluminum compound. In other embodiments, a non-coordinating anion or non-coordinating anion precursor may be employed in lieu of a halogen source. Where the alkylating agent includes a hydride compound, the halogen source may include a tin halide as disclosed in U.S. Publ. No. 2005/0038215. In these or other embodiments, other organometallic compounds (e.g., a nickel-containing compound may as disclosed in U.S. Pat. No. 6,699,813) or Lewis bases also may be employed.

Various lanthanide compounds or mixtures thereof can be employed. These compounds may be soluble in hydrocarbon solvents such as those discussed previously with respect to living polymerizations. Hydrocarbon-insoluble lanthanide compounds, which can be suspended in the polymerization medium to form a catalytically active species, also can be used.

The lanthanide atom in the lanthanide compounds can be in various oxidation states, e.g., 0, +2, +3, and +4. Exemplary lanthanide compounds include lanthanide carboxylates, organophosphates, organophosphonates, organophosphinates, carbamates, dithiocarbamates, xanthates, β-diketonates, alkoxides or aryloxides, halides, pseudo-halides, and oxyhalides, as well as organolanthanide compounds. (For the sake of simplicity, the remainder of this discussion focuses on Nd compounds while enabling those skilled in the art to select similar compounds based upon other lanthanide metals.)

Neodymium carboxylates include neodymium formate, neodymium acetate, neodymium acetate, neodymium acrylate, neodymium methacrylate, neodymium valerate, neodymium gluconate, neodymium citrate, neodymium fumarate, neodymium lactate, neodymium maleate, neodymium oxalate, neodymium 2-ethylhexanoate, neodymium neodecanoate, neodymium naphthenate, neodymium stearate, neodymium oleate, neodymium benzoate, and neodymium picolinate.

Neodymium organophosphates include neodymium dibutyl phosphate, neodymium dipentyl phosphate, neodymium dihexyl phosphate, neodymium diheptyl phosphate, neodymium dioctyl phosphate, neodymium bis(1-methylheptyl) phosphate, neodymium bis(2-ethylhexyl) phosphate, neodymium didecyl phosphate, neodymium didodecyl phosphate, neodymium dioctadecyl phosphate, neodymium dioleyl phosphate, neodymium diphenyl phosphate, neodymium bis(p-nonylphenyl) phosphate, neodymium butyl (2-ethylhexyl) phosphate, neodymium (1-methylheptyl) (2-ethylhexyl) phosphate, and neodymium (2-ethylhexyl) (p-nonylphenyl) phosphate.

Neodymium organophosphonates include neodymium butyl phosphonate, neodymium pentyl phosphonate, neodymium hexyl phosphonate, neodymium heptyl phosphonate, neodymium octyl phosphonate, neodymium (1-methylheptyl) phosphonate, neodymium (2-ethylhexyl) phosphonate, neodymium decyl phosphonate, neodymium dodecyl phosphonate, neodymium octadecyl phosphonate, neodymium oleyl phosphonate, neodymium phenyl phosphonate, neodymium (p-nonylphenyl) phosphonate, neodymium butyl butylphosphonate, neodymium pentyl pentylphosphonate, neodymium hexyl hexylphosphonate, neodymium heptyl heptylphosphonate, neodymium octyl octylphosphonate, neodymium (1-methylheptyl) (1-methylheptyl)phosphonate, neodymium (2-ethylhexyl) (2-ethylhexyl)phosphonate, neodymium decyl decylphosphonate, neodymium dodecyl dodecylphosphonate, neodymium octadecyl octadecylphosphonate, neodymium oleyl oleylphosphonate, neodymium phenyl phenylphosphonate, neodymium (p-nonylphenyl) (p-nonylphenyl)phosphonate, neodymium butyl (2-ethylhexyl)phosphonate, neodymium (2-ethylhexyl) butylphosphonate, neodymium (1-methylheptyl) (2-ethylhexyl)phosphonate, neodymium (2-ethylhexyl) (1-methylheptyl)phosphonate, neodymium (2-ethylhexyl) (p-nonylphenyl)phosphonate, and neodymium (p-nonylphenyl) (2-ethylhexyl)phosphonate.

Neodymium organophosphinates include various neodymium alkylphosphinates, neodymium phenylphosphinate, neodymium (p-nonylphenyl)phosphinate, neodymium dialkylphosphinates, neodymium diphenylphosphinate, neodymium bis(p-nonylphenyl)-phosphinate, neodymium butyl(2-ethylhexyl)phosphinate, neodymium (1-methylheptyl)-(2-ethylhexyl)phosphinate, and neodymium (2-ethylhexyl)(p-nonylphenyl)phosphinate.

Neodymium carbamates include neodymium dimethylcarbamate, neodymium diethylcarbamate, neodymium diisopropylcarbamate, neodymium dibutylcarbamate, and neodymium dibenzylcarbamate.

Neodymium dithiocarbamates include neodymium dimethyldithiocarbamate, neodymium diethyldithiocarbamate, neodymium diisopropyldithiocarbamate, neodymium dibutyldithiocarbamate, and neodymium dibenzyldithiocarbamate.

Neodymium xanthates include neodymium methylxanthate, neodymium ethylxanthate, neodymium isopropylxanthate, etc., and neodymium benzylxanthate.

Neodymium β-diketonates include neodymium acetylacetonate, neodymium trifluoroacetylacetonate, neodymium hexafluoroacetylacetonate, neodymium benzoylacetonate, and neodymium 2,2,6,6-tetramethyl-3,5-heptanedionate.

Neodymium alkoxides or aryloxides include neodymium methoxide, neodymium ethoxide, neodymium isopropoxide, neodymium 2-ethylhexoxide, neodymium phenoxide, neodymium nonylphenoxide, and neodymium naphthoxide.

Neodymium halides include NdF₃, NdCl₃, NdBr₃, and NdI₃. Suitable neodymium pseudo-halides include Nd(CN)₃, Nd(OCN)₃, neodymium thiocyanate, neodymium azide, and neodymium ferrocyanide. Suitable neodymium oxyhalides include NdOF, NdOCI, and NdOBr. Where neodymium halides, oxyhalides, or other compounds containing labile halogen atoms are employed, the Nd-containing compound can serve as both the lanthanide compound as well as the halogen-containing compound. A Lewis base such as THF may be employed as an aid for solubilizing this class of neodymium compounds in inert organic solvents.

Various alkylating agents, or mixtures thereof, can be used. Alkylating agents, which may also be referred to as hydrocarbylating agents, include organometallic compounds that can transfer hydrocarbyl groups to another metal. Typically, these agents include organometallic compounds of electropositive metals such as those from Groups 1, 2, and 3 (Groups IA, IIA, and IIIA). Common alkylating agents include organoaluminum and organomagnesium compounds, some of which are soluble in the types of hydrocarbon solvents described above. Where the alkylating agent includes a labile halogen atom, the alkylating agent may also serve as the halogen-containing compound.

Organoaluminum compounds include those represented by the formula AlRₙX₃₋ₙ where each R independently is a monovalent organic group attached to the A1 atom via a C atom; each X independently is a H atom, a halogen atom, a carboxylate group, an alkoxide group, or an aryloxide group; and n is an integer of from 1 to 3. Each R can be a hydrocarbyl group such as, but not limited to, alkyl, cycloalkyl, substituted cycloalkyl, alkenyl, cycloalkenyl, substituted cycloalkenyl, aryl, substituted aryl, aralkyl, alkaryl, allyl, and alkynyl groups, where each group may contain from 1 carbon atom, or the appropriate minimum number of carbon atoms to form the group, up to about 20 carbon atoms. These hydrocarbyl groups may contain heteroatoms such as, but not limited to, N, O, B, Si, S, and P.

Organoaluminum compounds include trihydrocarbylaluminum; dihydrocarbylaluminum hydrides, carboxylates, aryloxides, alkoxides, and halides; and hydrocarbylaluminum dihydride, bis(carboxylate), diaryloxide, dialkoxide, and dihalide compounds.

Trihydrocarbylaluminum compounds include trimethylaluminum, triethylaluminum, triisobutylaluminum, tri-n-propylaluminum, triisopropylaluminum, tri-n-butylaluminum, tri-t-butylaluminum, tri-n-pentylaluminum, trineopentylaluminum, tri-n-hexylaluminum, tri-n-octylaluminum, tris(2 ethylhexyl)aluminum, tricyclohexylaluminum, tris(1-methylcyclopentyl)aluminum, triphenylaluminum, tri-p-tolylaluminum, tris(2,6-dimethylphenyl)aluminum, tribenzylaluminum, diethylphenylaluminum, diethyl-p-tolylaluminum, diethylbenzylaluminum, ethyldiphenylaluminum, ethyldi-p-tolylaluminum, and ethyldibenzylaluminum.

Dihydrocarbylaluminum hydride compounds include diethylaluminum hydride, di-n-propylaluminum hydride, diisopropylaluminum hydride, di-n-butylaluminum hydride, diisobutylaluminum hydride, di-n-octylaluminum hydride, diphenylaluminum hydride, di-p-tolylaluminum hydride, dibenzylaluminum hydride, phenylethylaluminum hydride, phenyl-n-propylaluminum hydride, phenylisopropylaluminum hydride, phenyl-n-butylaluminum hydride, phenylisobutylaluminum hydride, phenyl-n-octylaluminum hydride, p-tolylethylaluminum hydride, p-tolyl-n-propylaluminum hydride, p-tolylisopropylaluminum hydride, p-tolyl-n-butylaluminum hydride, p-tolylisobutylaluminum hydride, p-tolyl-n-octylaluminum hydride, benzylethylaluminum hydride, benzyl-n-propylaluminum hydride, benzylisopropylaluminum hydride, benzyl-n-butylaluminum hydride, benzylisobutylaluminum hydride, and benzyl-n-octylaluminum hydride.

Hydrocarbylaluminum dihydrides include ethylaluminum dihydride, n-propylaluminum dihydride, isopropylaluminum dihydride, n-butylaluminum dihydride, isobutylaluminum dihydride, and n-octylaluminum dihydride.

Dihydrocarbylaluminum chloride compounds include diethylaluminum chloride, di-n-propylaluminum chloride, diisopropylaluminum chloride, di-n-butylaluminum chloride, diisobutylaluminum chloride, di-n-octylaluminum chloride, diphenylaluminum chloride, di-p-tolylaluminum chloride, dibenzylaluminum chloride, phenylethylaluminum chloride, phenyl-n-propylaluminum chloride, phenylisopropylaluminum chloride, phenyl-n-butylaluminum chloride, phenylisobutylaluminum chloride, phenyl-n-octylaluminum chloride, p-tolylethylaluminum chloride, p-tolyl-n-propylaluminum chloride, p-tolylisopropylaluminum chloride, p-tolyl-n-butylaluminum chloride, p-tolylisobutylaluminum chloride, p-tolyl-n-octylaluminum chloride, benzylethylaluminum chloride, benzyl-n-propylaluminum chloride, benzylisopropylaluminum chloride, benzyl-n-butylaluminum chloride, benzylisobutylaluminum chloride, and benzyl-n-octylaluminum chloride.

Hydrocarbylaluminum dichloride include ethylaluminum dichloride, n-propylaluminum dichloride, isopropylaluminum dichloride, n-butylaluminum dichloride, isobutylaluminum dichloride, and n-octylaluminum dichloride.

Other organoaluminum compounds include dimethylaluminum hexanoate, diethylaluminum octoate, diisobutylaluminum 2-ethylhexanoate, dimethylaluminum neodecanoate, diethylaluminum stearate, diisobutylaluminum oleate, methylaluminum bis(hexanoate), ethylaluminum bis(octoate), isobutylaluminum bis(2-ethylhexanoate), methylaluminum bis(neodecanoate), ethylaluminum bis(stearate), isobutylaluminum bis(oleate), dimethylaluminum methoxide, diethylaluminum methoxide, diisobutylaluminum methoxide, dimethylaluminum ethoxide, diethylaluminum ethoxide, diisobutylaluminum ethoxide, dimethylaluminum phenoxide, diethylaluminum phenoxide, diisobutylaluminum phenoxide, methylaluminum dimethoxide, ethylaluminum dimethoxide, isobutylaluminum dimethoxide, methylaluminum diethoxide, ethylaluminum diethoxide, isobutylaluminum diethoxide, methylaluminum diphenoxide, ethylaluminum diphenoxide, isobutylaluminum diphenoxide, and the like, and mixtures thereof.

Also useful are aluminoxanes including oligomeric linear aluminoxanes and oligomeric cyclic aluminoxanes represented by the respective general formulae 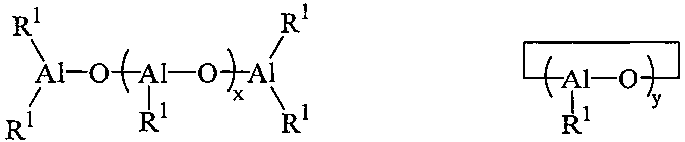 where x can be an integer of from 1 to about 100 or from about 10 to about 50; y may be an integer of from 2 to about 100 or from about 3 to about 20; and each R¹ independently may be a monovalent organic group attached to the A1 atom via a C atom. Each R¹ can be a hydrocarbyl group such as, but not limited to, alkyl, cycloalkyl, substituted cycloalkyl, alkenyl, cycloalkenyl, substituted cycloalkenyl, aryl, substituted aryl, aralkyl, alkaryl, allyl, and alkynyl groups, where each group may contain from 1 carbon atom, or the appropriate minimum number of carbon atoms to form the group, up to about 20 carbon atoms. These hydrocarbyl groups may contain heteroatoms such as those mentioned above. (The number of moles of the aluminoxane as used herein refers to the number of moles of the aluminum atoms rather than the number of moles of the oligomeric aluminoxane molecules.)

Aluminoxanes can be prepared by reacting trihydrocarbylaluminum compounds with water. This reaction can be performed according to known methods, such as (1) a method in which the trihydrocarbylaluminum compound may be dissolved in an organic solvent and then contacted with water, (2) a method in which the trihydrocarbylaluminum compound may be reacted with water of crystallization contained in, for example, metal salts, or water adsorbed in inorganic or organic compounds, and (3) a method in which the trihydrocarbylaluminum compound may be reacted with water in the presence of the monomer or monomer solution that is to be polymerized.

Aluminoxane compounds include methylaluminoxane (MAO), modified methylaluminoxane (MMAO, which can be formed by substituting ∼20-80% of the methyl groups of MAO with C₂-C₁₂ hydrocarbyl groups, preferably isobutyl groups), ethylaluminoxane, n-propylaluminoxane, isopropylaluminoxane, butylaluminoxane, isobutylaluminoxane, n-pentylaluminoxane, neopentylaluminoxane, n-hexylaluminoxane, n-octylaluminoxane, 2-ethylhexylaluminoxane, cyclohexylaluminoxane, 1-methylcyclopentylaluminoxane, phenylaluminoxane, 2,6-dimethylphenylaluminoxane, etc., and mixtures thereof. Isobutylaluminoxane is particularly useful due to its availability and solubility in aliphatic and cycloaliphatic hydrocarbon solvents.

One class of useful organomagnesium compounds can be represented by the formula MgR²₂, where each R² independently is a monovalent organic group attached to the Mg atom via a C atom. Each R² can be a hydrocarbyl group such as, but not limited to, alkyl, cycloalkyl, substituted cycloalkyl, alkenyl, cycloalkenyl, substituted cycloalkenyl, aryl, allyl, substituted aryl, aralkyl, alkaryl, and alkynyl groups, where each group may contain from 1 carbon atom, or the appropriate minimum number of carbon atoms to form the group, up to about 20 carbon atoms. These hydrocarbyl groups may contain heteroatoms such as those set forth previously. Examples of suitable dihydrocarbylmagnesium compounds include diethylmagnesium, di-n-propylmagnesium, diisopropylmagnesium, dibutylmagnesium, dihexylmagnesium, diphenylmagnesium, dibenzylmagnesium, and mixtures thereof. Dibutylmagnesium may be readily available and may be soluble in aliphatic and cycloaliphatic hydrocarbon solvents.

Another class of organomagnesium compounds that can be utilized include compounds represented by the formula R³MgX where R³ is a monovalent organic group attached to the Mg atom via a C atom, and X is a hydrogen atom, a halogen atom, a carboxylate group, an alkoxide group, or an aryloxide group. In one or more embodiments, R³ can be a hydrocarbyl group such as, but not limited to, alkyl, cycloalkyl, substituted cycloalkyl, alkenyl, cycloalkenyl, substituted cycloalkenyl, aryl, allyl, substituted aryl, aralkyl, alkaryl, and alkynyl groups, where each group may contain from 1 carbon atom, or the appropriate minimum number of carbon atoms to form the group, up to about 20 carbon atoms. These hydrocarbyl groups may contain heteroatoms such as those set forth previously. In one or more embodiments, X is a C₁-C₂₀ carboxylate, alkoxide, or aryloxide group. Organomagnesium compounds represented by the formula R³MgX include, but are not limited to, hydrocarbylmagnesium hydrides, halides, carboxylates, alkoxides, aryloxides, and mixtures thereof; various alkylmagnesium hydrides, halides, carboxylates, alkoxides, aryloxides, and mixtures thereof; and various arylmagnesium hydrides, halides, carboxylates, alkoxides, aryloxides, and mixtures thereof.

Various compounds, or mixtures thereof, that contain one or more labile halogen atoms can be employed as the halogen source. These compounds may simply be referred to as halogen-containing compounds. A combination of two or more halogen atoms can also be utilized. In one or more embodiments, the halogen-containing compounds may be soluble in a hydrocarbon solvent. In other embodiments, hydrocarbon-insoluble halogen-containing compounds, which can be suspended in the oligomerization medium to form the catalytically active species, may be useful.

Types of halogen-containing compounds include, but are not limited to, elemental halogens, mixed halogens (e.g., ICl, IBr, ICl₅, and IF₅), hydrogen halides (e.g., HF, HCl, HBr, etc.), organic halides, inorganic halides, metallic halides, organometallic halides, and mixtures thereof.

Organic halides include t-butyl chloride, t-butyl bromides, allyl chloride, allyl bromide, benzyl chloride, benzyl bromide, chloro-di-phenylmethane, bromo-di-phenylmethane, triphenylmethyl chloride, triphenylmethyl bromide, benzylidene chloride, benzylidene bromide, methyltrichlorosilane, phenyltrichlorosilane, dimethyldichlorosilane, diphenyldichlorosilane, trimethylchlorosilane, benzoyl chloride, benzoyl bromide, propionyl chloride, propionyl bromide, methyl chloroformate, and methyl bromoformate.

Inorganic halides include PCl₃, PBr₃, PCl₅, phosphorus oxychloride, phosphorus oxybromide, BF₃, BCl₃, BBr₃, SiF₄, SiCl₄, SiBr₄, SiI₄, AsCl₃, AsBr₃, AsI₃, SeCl₄, SeBr₄, TeCl₄, TeBr₄, and TeI₄.

Metallic halides include SnCl₄, SnBr₄, AlCl₃, AlBr₃, SbCl₃, SbCl₅, SbBr₃, AlI₃, AlF₃, GaCl₃, GaBr₃, GaI₃, GaF₃, InCl₃, InBr₃, InI₃, InF₃, TiCl₄, TiBr₄, TiI₄, ZnCl₂, ZnBr₂, ZnI₂, and ZnF₂.

Organometallic halides include dimethylaluminum chloride, diethylaluminum chloride, dimethylaluminum bromide, diethylaluminum bromide, dimethylaluminum fluoride, diethylaluminum fluoride, methylaluminum dichloride, ethylaluminum dichloride, methylaluminum dibromide, ethylaluminum dibromide, methylaluminum difluoride, ethylaluminum difluoride, methylaluminum sesquichloride, ethylaluminum sesquichloride, isobutylaluminum sesquichloride, methylmagnesium chloride, methylmagnesium bromide, methylmagnesium iodide, ethylmagnesium chloride, ethylmagnesium bromide, butylmagnesium chloride, butylmagnesium bromide, phenylmagnesium chloride, phenylmagnesium bromide, benzylmagnesium chloride, trimethyltin chloride, trimethyltin bromide, triethyltin chloride, triethyltin bromide, di-t-butyltin dichloride, dit-butyltin dibromide, dibutyltin dichloride, dibutyltin dibromide, tributyltin chloride, and tributyltin bromide.

Non-coordinating anions include bulky anions that do not form coordinate bonds with, for example, the active center of a catalyst system, due to steric hindrance. Non-coordinating anions include tetraarylborate anions (which optionally can be fluorinated). Ionic compounds containing non-coordinating anions are known in the art, and also include a countercation such as a carbonium (e.g., triarylcarbonium), ammonium, or phosphonium cation. An exemplary material is tetrakis(pentafluorophenyl)borate.

Non-coordinating anion precursors include substances that can form a non-coordinating anion under reaction conditions. Non-coordinating anion precursors include trialkyl boron compounds, BR⁴₃, where R⁴ is a strong electron-withdrawing group such as pentafluorophenyl group.

The foregoing catalyst compositions may have high catalytic activity for polymerizing conjugated dienes into stereospecific polydienes over a wide range of catalyst concentrations and catalyst ingredient ratios. The catalyst ingredients may interact to form an active catalyst species, and the optimum concentration for any one ingredient may depend on the concentrations of the other ingredients.

The molar ratio of alkylating agent to lanthanide compound (alkylating agent/Ln) can range from about 1:1 to about 1000:1, from about 2:1 to about 500:1, or from about 5:1 to about 200:1. Where both an alkyl aluminum compound and an aluminoxane are employed as alkylating agents, the molar ratio of alkyl aluminum to lanthanide compound (Al/Ln) can range from about 1:1 to about 200:1, from about 2:1 to about 150:1, or from about 5:1 to about 100:1, and the molar ratio of the aluminoxane to the lanthanide compound (aluminoxane/Ln) can range from 5:1 to about 1000:1, from about 10:1 to about 700:1, or from about 20:1 to about 500:1.

The molar ratio of non-coordinating anion or non-coordinating anion precursor to lanthanide compound (An/Ln) can range from about 1:2 to about 20:1, from about 3:4 to about 10:1, or from about 1:1 to about 6:1.

The catalyst composition may be formed by combining the catalyst ingredients. Although an active catalyst species is believed to result from this combination, the degree of interaction or reaction between the various ingredients or components is not known with any great degree of certainty. Therefore, the term "catalyst composition" has been employed to encompass a simple mixture of the ingredients, a complex of the various ingredients that is caused by physical or chemical forces of attraction, a chemical reaction product of the ingredients, or a combination of the foregoing.

The catalyst composition of this invention can be formed by various methods. For example, the catalyst composition may be formed in situ by adding the catalyst ingredients to a solution containing monomer and solvent, or simply bulk monomer, in either a stepwise or simultaneous manner. In one embodiment, the alkylating agent can be added first, followed by the lanthanide compound, and then followed by the halogen-containing compound, if used, or by the non-coordinating anion or non-coordinating anion precursor.

Alternatively, the catalyst ingredients may be mixed outside the polymerization system at a temperature of from ∼ -20° to ∼80°C, and the resulting catalyst composition aged for a few minutes to a few days prior to being added to the monomer solution.

The catalyst composition also may be formed in the presence of at least one conjugated diene monomer. That is, the catalyst ingredients may be pre-mixed in the presence of a small amount of conjugated diene monomer at a temperature of from ∼ -20° to ∼80°C. The amount of conjugated diene monomer that may be used can range from about 1 to about 500 moles, from about 5 to about 250 moles, or from about 10 to about 100 moles, per mole of the lanthanide compound. The resulting catalyst composition may be aged for a few minutes to a few days prior to being added to the remainder of the conjugated diene monomer.

Alternatively, the catalyst composition may be formed by using a multistage procedure. The first stage can involve combining the alkylating agent with the lanthanide compound in the absence of conjugated diene monomer or in the presence of a small amount of conjugated diene monomer at a temperature of from ∼ -20° to ∼80°C. The foregoing reaction mixture and the halogen-containing compound, non-coordinating anion, or non-coordinating anion precursor can be charged in either a stepwise or simultaneous manner to the remainder of the conjugated diene monomer.

When a solution of the catalyst composition or one or more of the catalyst ingredients is prepared outside the polymerization system, an organic solvent or carrier may be employed. The organic solvent may serve to dissolve the catalyst composition or ingredients, or the solvent may simply serve as a carrier in which the catalyst composition or ingredients may be suspended. The organic solvent may be inert to the catalyst composition. Useful solvents include those described previously.

Production of polymer can be accomplished by polymerizing conjugated diene(s) in the presence of a catalytically effective amount of the foregoing catalyst composition. The total catalyst concentration to be employed in the polymerization mass may depend on the interplay of various factors such as the purity of the ingredients, polymerization temperature, polymerization rate and conversion desired, desired molecular weight, and the like. Accordingly, a specific total catalyst concentration cannot be definitively set forth except to say that catalytically effective amounts of the respective catalyst ingredients can be used. The amount of the lanthanide compound used can be varied from about 0.01 to about 2 mmol, from about 0.02 to about 1 mmol, or from about 0.05 to about 0.5 mmol, per 100 g of conjugated diene monomer.

Polymerization can be carried out in an organic solvent as the diluent. Both the monomer to be polymerized and the polymer formed are soluble in the polymerization medium. Alternatively, a precipitation polymerization system may be employed by choosing a solvent in which the polymer formed is insoluble. In both cases, the monomer to be polymerized may be in a condensed phase. Also, the catalyst ingredients may be solubilized or suspended within the organic solvent; here and in other embodiments, the catalyst ingredients or components are unsupported or not impregnated into a catalyst support. In other embodiments, the catalyst ingredients or components may be supported.

In performing these polymerizations, an amount of organic solvent in addition to the amount of organic solvent that may be used in preparing the catalyst composition may be added to the polymerization system. The additional organic solvent may be the same as or different from the organic solvent used in preparing the catalyst composition. An organic solvent that is inert with respect to the catalyst composition employed to catalyze the polymerization may be selected. Exemplary hydrocarbon solvents have been set forth above. When a solvent is employed, the concentration of the monomer to be polymerized may not be limited to a special range. In one or more embodiments, however, the concentration of the monomer present in the polymerization medium at the beginning of the polymerization can range from about 3 to about 80% by weight, from about 5 to about 50% by weight, or from about 10 to about 30% by weight.

Polymerization of conjugated dienes may also be carried out by means of bulk polymerization, which refers to a polymerization environment where substantially no solvents are employed, either in a condensed liquid phase or in a gas phase. Polymerization of conjugated dienes also may be carried out as a batch process, a continuous process, or a semi continuous process.

Polymers prepared by employing a lanthanide-based catalyst composition may include reactive chain ends prior to terminating or quenching the polymerization.

Regardless of which type of polymerization process is employed, at this point, the reaction mixture commonly is referred to as a "polymer cement" because of its relatively high concentration of polymer, typically at least double the concentrations encountered in the types of lab scale polymerizations discussed above in the Background section.

The polymer is provided with an amino functional group prior to being quenched. This functionalization can be effected by introducing to the polymer cement a compound that includes at least one protected amino group. The ordinarily skilled artisan can envision many such compounds, but two broad categories are discussed below for purpose of illustration.

Typically, one cannot predict whether functionalization that works on a living polymer will work with a pseudo-living polymer. However, in the present method, the materials discussed below are believed to work in both types of systems.

One such material includes, in addition to a protected amino group, at least one electrophilic functionality; these materials are referred to below as category A reactants. A convenient electrophilic group is a halogen atom (preferably Cl, Br, or I), which can react readily with, for example, the countercation of living anionic polymers, typically an alkali metal ion such as Li⁺. In such materials, the nitrogen atom of the protected amino group can bond to groups that generally are not reactive toward living anionic polymers yet can be removed selectively and completely under conditions that do not degrade such polymers. Examples of such materials include the class of materials known as aza-disilacycloalkanes, particularly those where the ring structure includes 5 or 6 atoms and those where each Si atom is di-substituted; specific examples include 1-(3-halopropyl)-2,2,5,5-tetramethyl-1-aza-2,5-disilacyclopentane, 1-(3-halopropyl)-2,2,5,5-tetraethyl-1-aza-2,5-disilacyclopentane, 1-(3-halopropyl)-2,2,6,6-tetramethyl-1-aza-2,6-disilacyclopentane, 1-(3-halopropyl)-2,2,6,6-tetraethyl-1-aza-2,6-disilacyclohexane, 1-(2-haloethyl)-2,2,5,5-tetramethyl-1-aza-2,5-disilacyclopentane, and the like. The halogen atom can be spaced from the amino nitrogen by a C₂-C₃ alkyl chain, and the alkyl groups attached to the Si atoms can be (independently) C₁-C₂ alkyl groups. For reasons including cost and commercial availability, a preferred category A reactant is 1-(3-bromopropyl)-2,2,5,5-tetramethyl-1-aza-2,5-disilacyclopentane. Because of the reactivity of living polymers with electrophilic moieties such as a halogen atom, the reaction of this type of material with the living polymer can be performed quickly (e.g., ∼15-60 min.) using relatively mild conditions (e.g., ∼25°-75°C and atmospheric or slightly elevated pressures).

A polymer with a protected amino functional group also can be provided by reacting the living or pseudo-living polymer with a compound that includes at least one NR'-C(Z)- portion, e.g., a heterocyclic compound that includes within its ring structure one or more NR'-C(Z)- units, where Z can be S or O and R' is an alkyl or aryl group; these materials are referred to below as category B reactants. The size of the ring structure is not believed to be critical, although compounds with 5- through 8-membered rings typically are among the most readily available. In these compounds, the bond between the substituted nitrogen atom and the carbonyl group tends to open readily in the presence of a carbanion such as a living polymer; this provides a convenient mechanism for introducing a protected amino functional group into a living polymer. Specific examples of category B reactants include N-substituted lactams such as N-methyl-β-propiolactam, N-tert-butyl-β-propiolactam, N-phenyl-β-propiolactam, N-naphthyl-β-propiolactam, N-methyl-ε-caprolactam, N-phenyl-ε-caprolactam, N-vinyl-ε-caprolactam, N-benzyl-ε-caprolactam, N-naphthyl-ε-caprolactam, N-methyl-ω-laurylolactam, N-phenyl-ω-laurylolactam, N-tert-butyl-ω-laurylolactam, N-vinyl-ω-laurylolactam, N-benzyl-ω-laurylolactam, N-methyl-octalactam, and the like; pyrrolidinones (often referred to as pyrollidones) such as N-methyl-2-pyrrolidone, N-tert-butyl-2-pyrrolidone, N-phenyl-2-pyrrolidone, N-vinyl-2-pyrrolidone, N-benzyl-2-pyrrolidone, N-naphthyl-2-pyrrolidone, N-methyl-5-methyl-2-pyrrolidone, N-tert-butyl-5-methyl-2-pyrrolidone, N-phenyl-5-methyl-2-pyrrolidone, and the like; imidazolidinones such as, e.g., 1,3-dialkyl-2-imidazolidinone; piperidones such as N-methyl-2-piperidone, N-tert-butyl-2-piperidone, N-phenyl-2-piperidone, N-methoxyphenyl-2-piperidone, N-vinyl-2-piperidone, N-benzyl-2-piperidone, N-naphthyl-2-piperidone, and the like; and pyrimidinones such as, e.g., 1,3-dimethyl-3,4,5,6-tetrahydro-2(1H)-pyrimidinone. (Although each foregoing example utilizes O as Z, the corresponding compounds where Z is S also can be mentioned as exemplary materials.)

When category A and/or B reactant materials are added to a polymer cement, they can react at the reactive chain ends of the polymers. When added to carbanionic living polymer, they react at the location of the anion, typically the end of the longest polymeric chain. Where a multifunctional initiator is employed during polymerization, reaction with the foregoing types of compounds can occur on each terminus of the polymer.

Mixing of a type commonly employed in commercial processes is sufficient to ensure near stoichiometric reaction between the polymer and the compound(s) that provides a protected amino functional group.

Advantageously, the protected amino functional group can be de-protected conveniently through hydrolysis, typically effected through introduction of an acid. With respect to category A reactants, a strong inorganic protonic acid can be delivered in, e.g., a polar organic solvent. Use of a relatively strong protonic acid typically ensures extensive, often complete, de-protection. In other words, the previously di-substituted nitrogen atom from the category A reactant (commonly located at the terminus of the polymer) yields an acidic cation, i.e., a -NH₃⁺ group, and the carbanion (in a living polymerization) becomes a polymer that includes an acidic cation of a primary amine functionality.

With respect to category B reactants, acidic hydrolysis yields an acidic cation, i.e., a-NRH₂⁺ group, and the carbanion (in a living polymerization) becomes a polymer that includes an acidic cation of a secondary amine functionality.

An amine salt (i.e., an acidic cation of primary or secondary amine functionality) can exhibit less interactivity with particulate filler than the corresponding primary or secondary (free) amine. Accordingly, neutralization (i.e., de-protonation) can be desirable. However, as is discussed in more detail below, neutralization need not be performed on the polymer cement and, instead, the polymer can undergo additional processing prior to neutralization of its amine salt(s). This additional processing optionally can begin with quenching and/or desolventization.

Quenching typically is conducted by stirring the polymer and an active hydrogencontaining compound (e.g., an alcohol) for up to about 120 minutes at temperatures of from about 30° to 150°C. Solvent can be removed by conventional techniques such as drum drying, extruder drying, vacuum drying or the like, which may be combined with coagulation with water, alcohol or steam, thermal desolvation, etc.; if coagulation is performed, oven drying may be desirable. Drum drying can help to protect the acidic cation of the amine functionality and, if coagulation is utilized, maintaining neutral or very slightly acidic conditions can be preferable.

After desolventization, the resulting polymer often is stored in the form of blocks or slabs. By allowing the amino functionality of the polymer to remain in the aforementioned acidic cation form, the amino functionality is protected against undesirable coupling, i.e., dimerization, caused by oxidation. In other words, the N atom in the amine salt form is less susceptible to oxidation and the resulting coupling that often follows.

The functionalized polymer can be utilized in a tread stock compound or can be blended with any conventionally employed tread stock rubber including natural rubber and/or non-functionalized synthetic rubbers such as, e.g., one or more of poly(isoprene), SBR, poly(butadiene), butyl rubber, neoprene, ethylene/propylene rubber (EPR), ethylene/propylene/diene rubber (EPDM), acrylonitrile/butadiene rubber (NBR), silicone rubber, fluoroelastomers, ethylene/acrylic rubber, ethylene/vinyl acetate interpolymer (EVA), epichlorohydrin rubbers, chlorinated polyethylene rubbers, chlorosulfonated polyethylene rubbers, hydrogenated nitrile rubber, tetrafluoroethylene/propylene rubber and the like. When a functionalized polymer(s) is blended with conventional rubber(s), the amounts can vary from about 5 to about 99% by wt. of the total rubber, with the conventional rubber(s) making up the balance of the total rubber. The minimum amount depends to a significant extent on the degree of hysteresis reduction desired.

Amorphous silica (SiO₂) can be utilized as a filler. Silicas are generally classified as wet-process, hydrated silicas because they are produced by a chemical reaction in water, from which they are precipitated as ultrafine, spherical particles. These primary particles strongly associate into aggregates, which in turn combine less strongly into agglomerates. "Highly dispersible silica" is any silica having a very substantial ability to de-agglomerate and to disperse in an elastomeric matrix, which can be observed by thin section microscopy.

Surface area gives a reliable measure of the reinforcing character of different silicas; the Brunauer, Emmet and Teller ("BET") method (described in J. Am. Chem. Soc., vol. 60, p. 309 et seq.) is a recognized method for determining surface area. BET surface area of silicas generally is less than 450 m²/g, and useful ranges of surface are include from about 32 to about 400 m²/g, about 100 to about 250 m²/g, and about 150 to about 220 m²/g.

The pH of the silica filler is generally from about 5 to about 7 or slightly over, preferably from about 5.5 to about 6.8.

Some commercially available silicas which may be used include Hi-Sil™ 215, Hi-Sil™ 233, and Hi-Sil™ 190 (PPG Industries, Inc.; Pittsburgh, Pennsylvania). Other suppliers of commercially available silica include Grace Davison (Baltimore, Maryland), Degussa Corp. (Parsippany, New Jersey), Rhodia Silica Systems (Cranbury, New Jersey), and J.M. Huber Corp. (Edison, New Jersey).

Silica can be employed in an amount of about 1 to about 100 parts by weight (pbw) per 100 parts of polymer (phr), preferably in an amount from about 5 to about 80 phr. The useful upper range is limited by the high viscosity imparted by such fillers.

Other useful fillers include all forms of carbon black including, but not limited to, furnace black, channel blacks and lamp blacks. More specifically, examples of the carbon blacks include super abrasion furnace blacks, high abrasion furnace blacks, fast extrusion furnace blacks, fine furnace blacks, intermediate super abrasion furnace blacks, semi-reinforcing furnace blacks, medium processing channel blacks, hard processing channel blacks, conducting channel blacks, and acetylene blacks; mixtures of two or more of these can be used. Carbon blacks having a surface area (EMSA) of at least 20 m²/g, preferably at least about 35 to about 200 m²/g or higher are preferred; surface area values can be determined by ASTM D-1765 using the cetyltrimethyl-ammonium bromide (CTAB) technique. The carbon blacks may be in pelletized form or an unpelletized flocculent mass.

The amount of carbon black can be up to about 50 phr, with about 5 to about 40 phr being typical. When carbon black is used with silica, the amount of silica can be decreased to as low as about 1 phr; as the amount of silica decreases, lesser amounts of the processing aids, plus silane if any, can be employed.

Elastomeric compounds typically are filled to a volume fraction, which is the total volume of filler(s) added divided by the total volume of the elastomeric stock, of about 25%; accordingly, typical (combined) amounts of reinforcing fillers, i.e., silica and carbon black, is about 30 to 100 phr.

When silica is employed as a reinforcing filler, addition of a coupling agent such as a silane is customary so as to ensure good mixing in, and interaction with, the elastomer(s). Generally, the amount of silane that is added ranges between about 4 and 20% by weight, based upon the weight of silica filler present in the elastomeric compound.

Coupling agents can have a general formula of Q-T-X, in which Q represents a functional group capable of bonding physically and/or chemically with a group on the surface of the silica filler (e.g., surface silanol groups); T represents a hydrocarbon group linkage; and X represents a functional group capable of bonding with the elastomer (e.g., via a sulfur-containing linkage). Such coupling agents include organosilanes, in particular polysulfurized alkoxysilanes (see, e.g., U.S. Pat. Nos. 3,873,489, 3,978,103, 3,997,581, 4,002,594, 5,580,919, 5,583,245, 5,663,396, 5,684,171, 5,684,172, 5,696,197, etc.) or polyorganosiloxanes bearing the X and Q functionalities mentioned above. One preferred coupling agent is bis[3-(triethoxysilyl)propyl]tetrasulfide.

Addition of a processing aid can be used to reduce the amount of silane employed. See, e.g., U.S. Pat. No. 6,525,118 for a description of fatty acid esters of sugars used as processing aids. Additional fillers useful as processing aids include, but are not limited to, mineral fillers, such as clay (hydrous aluminum silicate), talc (hydrous magnesium silicate), and mica as well as non-mineral fillers such as urea and sodium sulfate. Preferred micas contain principally alumina, silica and potash, although other variants are also useful, as set forth below. The additional fillers can be utilized in an amount of up to about 40 phr, preferably up to about 20 phr.

Other conventional rubber additives also can be added. These include, for example, process oils, plasticizers, anti-degradants such as antioxidants and antiozonants, curing agents and the like.

All of the ingredients can be mixed using standard equipment such as, e.g., Banbury or Brabender mixers. Typically, the initial mixing (i.e., that which is not intended to immediately precede vulcanization) occurs at a temperature between about 140° and 160°C, often between about 145° and 155°C.

Advantageously, some of the aforementioned additives, including particularly (but not necessarily limited to) certain curing agents and anti-degradants, are basic in nature due to, e.g., the presence of functionalities that include NH-containing moieties (e.g., amines and amides). For example, as described in more detail in conjunction with Tables 1a and 1b below, typical antioxidants include amines such as, e.g., *N*-phenyl-*N*'-(1,3-dimethylbutyl)-p-phenyldiamine, and typical accelerators (i.e., curing agents) include amides such as, e.g., benzothiazyl-2-cyclohexylsulfenamide, di(phenylthio)acetamide, etc., and amidines such as, e.g., *N*,*N*'-diphenyl guanidine.

After being mixed with the functionalized polymer(s), these types of basic additives contact the amine salts and, in effect, neutralize the acidic amino cation, thereby creating free amine functionality. This neutralization typically does not require additional effort or processing steps, i.e., it can occur naturally during the aforementioned mixing and storage of the resulting rubber stock, regardless of form (e.g., slab, wigwag, etc.).

If desired, one can include in the mixed components a strong inorganic base, a mixed base system such as pyridine/NaOH, or a very strong organic base such as a tetraalkylammonium hydroxide (e.g., (CH₃)₄NOH). However, use of such additional bases has not been found to be necessary under most circumstances.

Neutralization results in polymers with primary or secondary amino functional groups, optimally located at a terminus of a polymer. Both have been found to provide significant interactivity with particulate fillers, although the effect of primary amino functional groups seems to be particularly high.

Reinforced rubber compounds conventionally are cured with about 0.2 to about 5 phr of one or more known vulcanizing agents such as, for example, sulfur or peroxide-based curing systems. For a general disclosure of vulcanizing agents, the interested reader is directed to an overview such as that provided in Kirk-Othmer, Encyclopedia of Chem. Tech., 3d ed., (Wiley Interscience, New York, 1982), vol. 20, pp. 365-468. Sulfur curing typically occurs at about 170°C and, accordingly, curing components typically are mixed at a temperature that is ∼10-20°C higher than that employed in the initial mixing discussed above.

The presence of acidic cation-protected amine functionality can impact mixing in a positive manner. In at least some circumstances, the presence of polymers with acidic cation-protected amine functionality has been found to lower the temperature required during initial mixing (i.e., masterbatch stage) and, upon partial or full neutralization of the acidic cation so as to provide polymer with free amine functionality, raise the drop temperature during final mixing. Both of these effects typically are desirable; specifically, less energy (heat) is required for initial mixing (which, in addition to the obvious cost and environmental impact benefits, reduces the chance that the polymeric materials will be degraded or prematurely vulcanized) and higher drop temperatures mean typically mean faster cure times, less time in the mixing equipment (where degradation can occur), and increased production rates.

The following non-limiting, illustrative examples provide the reader with detailed conditions and materials that can be useful in the practice of the present invention.

### EXAMPLES

In the following examples, dried glass vessels previously sealed with extracted septum liners and perforated crown caps under a positive N₂ purge were used for all preparations. Butadiene, styrene (33% by wt. in hexane), hexane, n-butyllithium, oligomeric oxolanyl propanes (1.6 M solution in hexane, stored over CaH₂), and butylated hydroxytoluene (BHT) solution in hexane were used.

The following commercially available reagents and starting materials, all of which were acquired from Sigma-Aldrich Co. (St. Louis, Missouri), were used without further purification unless otherwise noted: 1-(3-bromopropyl)-2,2,5,5-tetramethyl-1-aza-2,5-disilacyclopentane (97% purity) and methyltriethoxysilane (99% purity), and pyridine (99% purity).

Testing data in the Examples was performed on filled compositions made according to the formulations shown in Tables 1a and 1b in which *N*-phenyl-*N*'-(1,3-dimethylbutyl)-p-phenyldiamine acts as an antioxidant while benzothiazyl-2-cyclohexylsulfenamide, *N*,*N*'-diphenyl guanidine, and di(phenylthio)acetamide act as accelerators. Each of these materials is an amine and, as described above, can act to neutralize the acidic cation of the amine functionality.

**Table 1a: Compound formulation, carbon black only**

| ***Masterbatch*** | | Amount (phr) |
|---|---|---|
| | Polymer | 100 |
| | carbon black (N343 type) | 55 |
| | wax | 1 |
| | *N*-phenyl-*N*'-(1,3-dimethylbutyl)-p-phenyldiamine | 0.95 |
| | ZnO | 2.5 |
| | stearic acid | 2 |
| | aromatic processing oil | 10 |

| | | |
|---|---|---|
| ***Final*** | | |
| | sulfur | 1.3 |
| | benzothiazyl-2-cyclohexylsulfenamide | 1.7 |
| | *N*,*N*'-diphenyl guanidine | 0.2 |
| | ***TOTAL*** | 174.65 |

**Table 1b: Compound formulation, carbon black and silica**

| ***Masterbatch*** | | Amount (phr) |
|---|---|---|
| | Polymer | 100 |
| | Silica | 30 |
| | carbon black (N343 type) | 35 |
| | *N*-phenyl-*N*'-(1,3-dimethylbutyl)-p-phenyldiamine | 0.95 |
| | stearic acid | 1.5 |
| | aromatic processing oil | 10 |
| | | |

| ***Re-mill*** | | |
|---|---|---|
| | 60% disulfide silane on carrier | 4.57 |
| | | |

| ***Final*** | | |
|---|---|---|
| | ZnO | 2.5 |
| | Sulfur | 1.7 |
| | benzothiazyl-2-cyclohexylsulfenamide | 1.5 |
| | di(phenylthio)acetamide | 0.25 |
| | N,N'-diphenyl guanidine | 0.2 |
| | ***TOTAL*** | 188.47 |

Data corresponding to "50°C Dynastat tan δ" were acquired from tests conducted on a Dynastat™ mechanical spectrometer (Dynastatics Instruments Corp.; Albany, New York) using the following conditions: 1 Hz, 2 kg static mass and 1.25 kg dynamic load, a cylindrical (9.5 mm diameter x 16 mm height) vulcanized rubber sample, and 50°C.

Data corresponding to "Bound Rubber" were determined using the procedure described by J.J. Brennan et al., Rubber Chem. and Tech., 40, 817 (1967).

### Examples 1-6

To a N₂-purged reactor equipped with a stirrer was added 1.37 kg hexane, 0.41 kg styrene, and 2.71 kg butadiene (20.1% by wt. in hexane). The reactor was charged with 3.68 mL n-BuLi (1.54 M in hexane), followed by 1.08 mL OOPs (in hexane). The reactor jacket was heated to 50°C and, after ∼25 minutes, the batch temperature peaked at ∼62°C. After an additional 15 minutes, the polymer cement was transferred from the reactor to dried glass vessels.

Three samples were terminated with, respectively, methyltriethoxysilane (sample 2), 1-(3-bromopropyl)-2,2,5,5-tetramethyl-1-aza-2,5-disilacyclopentane (sample 3), and a 1:1 blend of methyltriethoxysilane and 1-(3-bromopropyl)-2,2,5,5-tetramethyl-1-aza-2,5-disilacyclopentane (sample 4) in a 50°C bath for 30 minutes. Another sample was first reacted with hexamethylcyclotrisiloxane before being terminated with 2,2,5,5-tetramethyl-1-aza-2,5-disilacyclopentane (sample 5). These and a non-functionalized polymer (sample 1) were coagulated in isopropanol containing BHT and drum dried.

A portion of the polymer bearing a terminal protected amino functional group (sample 3) was hydrolyzed with 1% HCl in THF (∼1 hour at room temperature), followed by neutralization with a blend of pyridine and NaOH over a few minutes at room temperature, to provide an unprotected primary amino functional group-terminated polymer (identified as sample 6 below).

Using the formulations shown in Tables 1a and 1b, vulcanizable elastomeric compounds containing reinforcing fillers were prepared from samples 1-6. Results of physical testing on these compounds are shown below in Table 2. For those rows that include two data points, the upper is for a formulation from Table 1a, and the lower is for a formulation from Table 1b.

**Table 2: Testing data from Examples 1-6**

| | **1** | **2** | **3** | **4** | **5** | **6** |
|---|---|---|---|---|---|---|
| Mₙ (kg/mol) | 114 | 112 | 134 | 128 | 114 | 145 |
| | | | | | | |
| M_{w} / Mₙ | 1.06 | 1.05 | 1.17 | 1.16 | 1.06 | 1.34 |
| | | | | | | |
| % coupling | 0 | 12.3 | 30.7 | 22.9 | 3.0 | 40.4 |
| | | | | | | |
| T_{g} (°C) | -36.9 | -37.8 | -37.8 | -37.8 | -37.8 | -37.7 |
| | | | | | | |
| Bound rubber (%) | 16.7 | 22.8 | 40.2 | 34.2 | 15.3 | 47.9 |
| | 17.9 | 77.9 | 60.2 | 34.9 | 74.7 | 44.2 |
| | | | | | | |
| 171°C MDR t₅₀ (min) | 2.9 | 2.7 | 2.8 | 2.8 | 2.8 | 2.5 |
| | 6.9 | 6.1 | 5.4 | 5.1 | 6.3 | 3.8 |
| | | | | | | |
| 171°C MH-ML (kg-cm) | 19.0 | 19.6 | 17.8 | 18.6 | 18.8 | 17.5 |
| | 24.5 | 17.0 | 20.6 | 24.8 | 16.9 | 23.5 |
| | | | | | | |
| ML₁₊₄ @ 130°C | 28.8 | 35.1 | 58.7 | 45.7 | 29.0 | 66.0 |
| | 66.0 | 92.4 | 93.7 | 101.3 | 92.2 | 101.8 |
| | | | | | | |
| 300% modulus @ 23°C (MPa) | 11.4 | 11.5 | 13.1 | 12.9 | 10.7 | 15.4 |
| | 9.0 | 13.4 | 13.3 | 11.3 | 13.3 | 12.8 |
| | | | | | | |
| Tensile strength @ 23°C (MPa) | 18.5 | 18.5 | 19.3 | 20.4 | 16.5 | 19.1 |
| | 13.3 | 16.8 | 17.1 | 15.7 | 16.3 | 15.7 |
| | | | | | | |
| Temp. sweep 0°C tan δ | 0.194 | 0.194 | 0.216 | 0.201 | 0.188 | 0.236 |
| | 0.184 | 0.250 | 0.228 | 0.197 | 0.249 | 0.206 |
| | | | | | | |
| Temp. sweep 50°C tan δ | 0.259 | 0.246 | 0.196 | 0.221 | 0.247 | 0.149 |
| | 0.226 | 0.176 | 0.188 | 0.194 | 0.185 | 0.187 |
| | | | | | | |
| RDA 0.25-14% ΔG' (MPa) | 4.780 | 4.410 | 1.148 | 2.157 | 5.095 | 0.962 |
| | 8.470 | 2.470 | 2.671 | 5.198 | 2.544 | 3.964 |
| | | | | | | |
| 50°C RDA strain sweep (5% strain) tan δ | 0.2491 | 0.2359 | 0.1357 | 0.1752 | 0.2417 | 0.1129 |
| | 0.2230 | 0.1662 | 0.1581 | 0.1712 | 0.1641 | 0.1517 |
| | | | | | | |
| 50°C Dynastat tan δ | 0.2366 | 0.2206 | 0.1353 | 0.1677 | 0.2295 | 0.1139 |
| | 0.2046 | 0.1555 | 0.1604 | 0.1736 | 0.1573 | 0.1585 |
| | | | | | | |

From the 50°C strain sweep data of Table 2, one can see that a styrene/butadiene interpolymer having a terminal protected amino functional group (Example 3) can provide, compared to a control polymer, ∼45% reduction in tan δ when used in a carbon black-filled formulation while an unprotected (i.e., primary) amino functional group (Example 6) can provide, compared to a control polymer, ∼55% reduction in tan δ in a similar formulation.

From the tan δ at 0°C data in Table 2 (carbon black only formulation), one can see that the highest value, corresponding generally to better wet traction, is provided by the composition containing a polymer having a terminal unprotected amino functional group (Example 6).

While the foregoing data came from a filled composition that was neutralized immediately after de-protection, the data show that free primary amine functionality can provide significant benefits for properties such as, e.g., hysteresis reduction.

### Examples 7-10

The procedure described with respect to Examples 1-6 was, in substantial part, repeated. The following materials were used as terminating agents:
7 - isopropanol (control),
8 - tetraethoxysilane (comparative), and
9 & 10 - 1-(3-bromopropyl)-2,2,5,5-tetramethyl-1-aza-2,5-disilacyclopentane. Sample 10 was de-protected by the hydrolysis-neutralization scheme set forth above in Examples 1-6.

Using the formulations shown in Tables 1a and 1b above, vulcanizable elastomeric compounds containing reinforcing fillers were prepared from samples 7-10. Results of physical testing on these compounds are shown below in Table 3.

**Table 3: Testing data from Examples 7-10**

| | **7** | **8** | **9** | **10** |
|---|---|---|---|---|
| Mₙ (kg/mol) | 106 | 120 | 116 | 78 |
| | | | | |
| M_{w} / Mₙ | 1.06 | 1.50 | 1.28 | 1.80 |
| | | | | |
| % coupling | 0 | 19.2 | 38.7 | 83.8 |
| | | | | |
| T_{g} (°C) | -36.5 | -36.9 | -36.6 | -36.9 |
| | | | | |
| Bound rubber (%) | 12.0 | 21.6 | 38.3 | 35.5 |
| | 15.5 | 37.1 | 32.1 | 34.6 |
| | | | | |
| 171°C MDR t₅₀ (min) | 2.9 | 2.8 | 2.9 | 2.7 |
| | 7.5 | 7.7 | 5.2 | 5.7 |
| | | | | |
| 171°C MH-ML (kg-cm) | 17.4 | 17.2 | 16.9 | 17.3 |
| | 23.0 | 20.9 | 23.8 | 25.0 |
| | | | | |
| ML₁₊₄ @ 130°C | 26.2 | 33.1 | 60.0 | 60.0 |
| | 62.5 | 67.0 | 120.0 | 117.0 |
| | | | | |
| 300% modulus @ 23°C (MPa) | 10.6 | 11.0 | 13.3 | 13.2 |
| | 9.1 | 10.0 | 10.5 | 11.7 |
| | | | | |
| Tensile strength @ 23°C (MPa) | 17.9 | 19.0 | 19.1 | 18.9 |
| | 13.4 | 14.8 | 15.8 | 14.2 |
| | | | | |
| Temp. sweep 0°C tan δ | 0.212 | 0.209 | 0.236 | 0.237 |
| | 0.184 | 0.196 | 0.188 | 0.192 |
| | | | | |
| Temp. sweep 50°C tan δ | 0.273 | 0.264 | 0.195 | 0.197 |
| | 0.221 | 0.232 | 0.195 | 0.194 |
| | | | | |
| RDA 0.25-14% ΔG'(MPa) | 4.496 | 3.672 | 0.923 | 0.981 |
| | 9.638 | 5.878 | 5.493 | 6.449 |
| | | | | |
| 50°C RDA strain sweep (5% strain) tan δ | 0.2514 | 0.2282 | 0.1280 | 0.1162 |
| | 0.2235 | 0.2009 | 0.1695 | 0.1666 |
| | | | | |
| 50°C Dynastat tan δ | 0.2421 | 0.2226 | 0.1277 | 0.1237 |
| | 0.2087 | 0.2015 | 0.1735 | 0.1727 |
| | | | | |

From the 50°C strain sweep data of Table 3 (carbon black only formulation), one can see that a styrene/butadiene interpolymer having a terminal protected amino functional group (Example 9) again provides, compared to a control polymer, a nearly 50% reduction in tan δ while an unprotected (i.e., primary) amino functional group (Example 10) again provides, compared to a control polymer, a nearly 55% reduction in tan δ. The 50°C strain sweep data (carbon black + silica formulation) show that the same polymers with a terminal amino functional groups (Examples 9 and 10) both exhibit greater than a 15% reduction in tan δ compared to a similar TEOS terminated-polymer.

### Examples 11-15

To a N₂-purged reactor equipped with a stirrer was added 1.64 kg hexane, 0.41 kg styrene, and 2.43 kg butadiene (22.4% by wt. in hexane). The reactor was charged with 3.56 mL n-BuLi (1.60 M in hexane), followed by 1.05 mL OOPs (in hexane). The reactor jacket was heated to 50°C and, after ∼28 minutes, the batch temperature peaked at ∼64°C. After an additional 25 minutes, the polymer cement was transferred from the reactor to dried glass vessels.

Two samples each were terminated with, respectively, 1-methyl-2-pyrrolidinone (samples 12-13) and 1,3-dimethyl-2-imidazolidinone (samples 14-15). One of each of these (samples 13 and 15) also were treated with 1% HCl in THF (∼30 minutes at room temperature). These and a non-functionalized polymer (sample 11) were coagulated in isopropanol containing BHT and drum dried.

Using the formulation shown in Table 1a, vulcanizable elastomeric compounds containing reinforcing fillers were prepared from samples 11-15. The compounds were stored at room temperature (∼23°C) for 15 days prior to being tested. Results of physical testing are shown below in Table 4.

**Table 4: Testing data from Examples 11-15**

| | **11** | **12** | **13** | **14** | **15** |
|---|---|---|---|---|---|
| Mₙ (kg/mol) | 113 | 97 | 101 | 71 | 74 |
| M_{w} / Mₙ | 1.04 | 1.12 | 1.43 | 1.15 | 1.20 |
| T_{g} (°C) | -36.9 | -37.1 | -36.8 | -37.1 | -37.2 |
| Bound rubber (%) | 13.6 | 44.0 | 42.0 | 38.2 | 38.8 |
| 171°C MDR t₅₀ (min) | 3.0 | 2.7 | 2.9 | 2.2 | 2.3 |
| 171°C MH-ML (kg-cm) | 18.0 | 16.0 | 16.0 | 16.5 | 16.1 |
| ML₁₊₄ @ 130°C | 27.3 | 63.4 | 63.7 | 42.2 | 41.8 |
| 300% modulus @ 23°C (MPa) | 10.9 | 14.5 | 14.2 | 13.8 | 12.7 |
| Tensile strength @ 23°C (MPa) | 18.3 | 20.3 | 21.5 | 21.6 | 20.6 |
| Temp. sweep 0°C tan δ | 0.215 | 0.285 | 0.273 | 0.264 | 0.257 |
| Temp. sweep 50°C tan δ | 0.280 | 0.148 | 0.159 | 0.193 | 0.190 |
| RDA 0.25-14% ΔG' (MPa) | 6.137 | 0.715 | 0.747 | 0.789 | 0.705 |
| 50°C RDA strain sweep (5% strain) tan 8 | 0.267 | 0.110 | 0.115 | 0.125 | 0.124 |
| 50°C Dynastat tan δ | 0.2541 | 0.1138 | 0.1161 | 0.1305 | 0.1255 |

As mentioned in the Description section above, amine salts (i.e., acidic cations of primary or secondary amine functionality) are known to exhibit reduced interactivity with particulate filler relative to the corresponding primary or secondary (free) amine. However, in the 50°C strain sweep data of Table 4, the difference in hysteresis reduction between samples 12 and 13 (N-methyl-pyrrolidone) and between samples 14 and 15 (N,N-dimethylimidazoline) is negligible, indicating similarity between the functionalities attached to the polymers. This seems to indicate that the acid-reactive functionalities contained in, e.g., the anti-degradants and/or accelerators, neutralized the acidic cations from samples 13 and 15 and created free amine functionality similar to that already present in samples 12 and 14.

## Claims

1. A process for providing interaction between a functionalized polymer and particulate filler in a filled composition that comprises (1) a polymer comprising at least one functional group that comprises an acidic cation of a primary or secondary amine functionality, the polymer being elastomeric and including mer units that include unsaturation derived from polyenes, (2) a material comprising basic functionality , and (3) particulate filler, said process comprising:
a) allowing said material to react with said acidic cation resulting in de-protonation of said acidic cation so as to provide a functionalized polymer comprising a primary or secondary amine functional group; and
b) allowing said amine functional group of said functionalized polymer to interact with said filler.

2. A process as claimed in claim 1, wherein said polymer comprises units comprising pendent aromatic functionality.

3. A process as claimed in claim 1 or 2, wherein said polymer comprises a terminal functional group.

4. A process as claimed in claim 3, wherein said terminal functional group is located at a terminus of the longest chain of said polymer.

5. A process as claimed in any of claims 1 to 4, wherein said polymer comprises a hydrolysis product of a functionality comprising at least one protected amino group.

6. A process as claimed in claim 5, wherein said functionality comprises an aza-disilacycloalkane radical.

7. A process as claimed in claim 6, wherein said aza-disilacycloalkane comprises a 5- or 6-membered ring and disubstituted silicon atoms.

8. A process as claimed in claim 5, wherein said polymer comprises primary or secondary amine functionality.

9. A process as claimed in claim 5, wherein said functionality comprises the radical of a heterocyclic compound comprising within its ring structure a -NR'-C(Z)- segment, wherein Z is S or O and R¹ is an alkyl or aryl group.

10. A process as claimed in claim 9, wherein said functionality comprises an imidazolidinone or a pyrrolidinone radical.

11. A process as claimed in claim 1, wherein said basic material additionally is capable of acting as at least one of a curative, an antioxidant, and an antiozonant for said composition.

12. A process as claimed in any of claims 1 to 11, wherein said material comprising basic functionality comprises amine functionality.

13. A process as claimed in claim 1, further comprising mixing and forming a vulcanizate from said filled composition

14. A process as claimed in claim 13, further comprising forming a tire component from said vulcanizate.

## Patentansprüche

1. Verfahren zum Bereitstellen von Interaktion zwischen einem funktionalisierten Polymer und teilchenförmigem Füllstoff in einer gefüllten Zusammensetzung, die Folgendes umfasst: (1) ein Polymer, das mindestens eine funktionelle Gruppe umfasst, die ein saures Kation einer primären oder sekundären Aminfunktionalität umfasst, wobei das Polymer elastomerisch ist und Mer-Einheiten enthält, die eine Ungesättigtheit enthalten, die von Polyenen abgeleitet ist, (2) ein Material, das eine basische Funktionalität umfasst, und (3) einen teilchenförmigen Füllstoff, wobei das Verfahren Folgendes umfasst:
a) Gestatten, dass das Material mit dem sauren Kation reagiert, was zur Deprotonierung des sauren Kations führt, um ein funktionalisiertes Polymer bereitzustellen, das eine primäre oder sekundäre aminfunktionelle Gruppe umfasst; und
b) Gestatten, dass die aminfunktionelle Gruppe des funktionalisierten Polymers mit dem Füllstoff interagiert.

2. Verfahren nach Anspruch 1, wobei das Polymer Einheiten umfasst, die eine hängende aromatische Funktionalität umfassen.

3. Verfahren nach Anspruch 1 oder 2, wobei das Polymer eine endständige funktionelle Gruppe umfasst.

4. Verfahren nach Anspruch 3, wobei die endständige funktionelle Gruppe sich an einem Terminus der längsten Kette des Polymers befindet.

5. Verfahren nach einem der Ansprüche 1 bis 4, wobei das Polymer ein Hydrolyseprodukt einer Funktionalität umfasst, die mindestens eine geschützte Aminogruppe umfasst.

6. Verfahren nach Anspruch 5, wobei die Funktionalität ein Azadisilacycloalkanradikal umfasst.

7. Verfahren nach Anspruch 6, wobei das Azadisilacycloalkan einen 5- oder 6-gliedrigen Ring und disubstituierte Siliciumatome umfasst.

8. Verfahren nach Anspruch 5, wobei das Polymer eine primäre oder sekundäre Aminfunktionalität umfasst.

9. Verfahren nach Anspruch 5, wobei die Funktionalität das Radikal einer heterocyclischen Verbindung umfasst, die innerhalb ihrer Ringstruktur ein -NR'-C(Z)-Segment umfasst, wobei Z S oder O ist und R' eine Alkyl- oder Arylgruppe ist.

10. Verfahren nach Anspruch 9, wobei die Funktionalität ein Imidazolidinon- oder ein Pyrrolidinonradikal umfasst.

11. Verfahren nach Anspruch 1, wobei das basische Material zusätzlich in der Lage ist, als mindestens ein Aushärtungsmittel, ein Antioxidationsmittel und einen Antiozonant für die Zusammensetzung zu wirken.

12. Verfahren nach einem der Ansprüche 1 bis 11, wobei das Material eine basische Funktionalität umfasst, die eine Aminfunktionalität umfasst.

13. Verfahren nach Anspruch 1, des Weiteren das Mischen und Bilden eines Vulkanisats aus der gefüllten Zusammensetzung umfassend.

14. Verfahren nach Anspruch 13, des Weiteren das Bilden einer Reifenkomponente aus dem Vulkanisat umfassend.

## Revendications

1. Procédé fournissant l'interaction entre un polymère fonctionnalisé et une charge sous forme de particules dans une composition chargée qui comprend (1) un polymère comprenant au moins un groupe fonctionnel qui comprend un cation acide d'une fonctionnalité amine primaire ou secondaire, le polymère étant élastomère et comprenant des motifs mères qui incluent l'insaturation dérivés de polyènes, (2) un matériau comprenant une fonctionnalité basique, et (3) une charge sous forme de particules, ledit procédé comprenant :
a) le fait de laisser ledit matériau réagir avec ledit cation acide résultant en la déprotonation dudit cation acide afin de fournir un polymère fonctionnalisé comprenant un groupe fonctionnel amine primaire ou secondaire ; et
b) le fait de laisser ledit groupe fonctionnel amine dudit polymère fonctionnalisé interagir avec ladite charge.

2. Procédé tel que revendiqué selon la revendication 1, dans lequel ledit polymère comprend des motifs comprenant une fonctionnalité aromatique pendante.

3. Procédé tel que revendiqué selon la revendication 1 ou 2, dans lequel ledit polymère comprend un groupe fonctionnel terminal.

4. Procédé tel que revendiqué selon la revendication 3, dans lequel ledit groupe fonctionnel terminal est situé à une terminaison de la chaîne la plus longue dudit polymère.

5. Procédé tel que revendiqué selon l'une quelconque des revendications 1 à 4, dans lequel ledit polymère comprend un produit d'hydrolyse d'une fonctionnalité comprenant au moins un groupe amino protégé.

6. Procédé tel que revendiqué selon la revendication 5, dans lequel ladite fonctionnalité comprend un radical aza-disilacycloalcane.

7. Procédé tel que revendiqué selon la revendication 6, dans lequel ledit aza-disilacycloalcane comprend un cycle à 5 ou 6 chaînons et des atomes de silicium disubstitués.

8. Procédé tel que revendiqué selon la revendication 5, dans lequel ledit polymère comprend une fonctionnalité amine primaire ou secondaire.

9. Procédé tel que revendiqué selon la revendication 5, dans lequel ladite fonctionnalité comprend le radical d'un composé hétérocyclique comprenant à l'intérieur de sa structure cyclique un segment -NR'-C(Z)-, dans lequel Z est S ou O et R' est un groupe alkyle ou aryle.

10. Procédé tel que revendiqué selon la revendication 9, dans lequel ladite fonctionnalité comprend un radical imidazolidinone ou pyrrolidinone.

11. Procédé tel que revendiqué selon la revendication 1, dans lequel ledit matériau alcalin est capable de manière supplémentaire d'agir comme au moins un agent de durcissement, un antioxydant et un anti-ozone pour ladite composition.

12. Procédé tel que revendiqué selon l'une quelconque des revendications 1 à 11, dans lequel ledit matériau comprend une fonctionnalité basique qui comprend une fonctionnalité amine.

13. Procédé tel que revendiqué selon la revendication 1, comprenant en outre le mélange et la formation d'un vulcanisat à partir de ladite composition chargée.

14. Procédé tel que revendiqué selon la revendication 13, comprenant en outre la formation d'un composant de pneumatique à partir dudit vulcanisat.
